# EUROPEAN PATENT SPECIFICATION

(11) **EP 3 683 079 B1**
(45) Date of publication and mention of the grant of the patent: **14.12.2022**
(21) Application number: 18857061.8
(22) Date of filing: 13.09.2018
(51) Int. Cl.: B60K 1/04, B62D 21/15, B62D 25/02, B62D 25/20

(54) **BODY FRAME AND AUTOMOBILE HAVING AUTOMOBILE BODY FRAME**
KAROSSERIERAHMEN UND KRAFTFAHRZEUG MIT EINEM KAROSSERIERAHMEN
CADRE DE CARROSSERIE ET AUTOMOBILE DOTÉE DU CADRE DE CARROSSERIE

(30) Priority: 15.09.2017 CN 201721188575 U
(43) Date of publication of application: 22.07.2020
(73) Proprietor: Aiways Automobile (Shanghai) Co., Ltd, Jiading District Shanghai 201821 (CN)
(72) Inventor: GU, Feng, Shanghai 200090 (CN)
(74) Representative: RGTH
(86) International application number: PCT/CN2018/105535
(87) International publication number: WO 2019/052511

(56) References cited:
- EP-A1- 2 080 656
- CN-A- 104 648 480
- CN-A- 106 080 803
- CN-A- 106 080 803
- CN-U- 205 131 383
- CN-U- 205 131 383
- CN-U- 206 287 821
- CN-U- 207 257 348
- US-A1- 2013 126 255
- US-A1- 2017 001 667

## Description

### TECHNICAL FIELD

The present invention belongs to the technical field of installation of automobile battery pack, and relates to an automobile body frame and an automobile, in particular to an automobile body frame and an automobile having the automobile body frame.

### BACKGROUND

As a representative of new energy vehicles, battery electric vehicles have received more and more attention because of their cleanliness and economy. However, the development of the battery electric vehicles is limited by battery capacity and charging time. The development of electric vehicles dawned with the emergence of electric vehicle power replacement stations combined with the concept of automatic quick-change equipment in recent years. The concept of electric vehicle power replacement is that when the battery of the electric vehicle is about to run out, the electric vehicle is driven into a power replacement station and the battery box is removed and replaced with a fully charged battery box. The entire power replacement process will be completed by the automatic power replacement equipment of the power replacement station and it only takes 3 minutes. That is, the battery replacement can be completed within a time when the ordinary diesel locomotive enters the gas station once, which greatly reduces the trouble with charging and battery maintenance for users of electric vehicles and increases the cruising range of electric vehicles in the meantime.

Document US2017/001667A1 provides a scalable vehicle frame for a vehicle, in which the battery subassembly is arranged at the middle section by the left center frame section and the right center frame section. Document CN205131383U provides a vehicle body frame in which the stiffening lower lateral beam is connected between the extension board leading portions of the front longitudinal beams and is perpendicular to the front longitudinal beams, and the battery package is fixed to the stiffening lower lateral beam by a bolt. Document CN106080803A provides a vehicle body frame in which a battery fixing structure is arranged inside the door sill beam to fix a battery package.

However, there are problems that in the event of a collision, the shape of the automobile cannot be better protected.

Therefore, how to provide an automobile body frame and an automobile having the automobile body frame, to solve the problems that in the event of a collision, the shape of the automobile cannot be better protected, has become a technical problem to be solved by those skilled in the art.

### SUMMARY

In view of the above-mentioned shortcomings of the prior art, an object of the present invention is to provide an automobile body frame and an automobile having the automobile body frame, to solve the problems that in the event of a collision, the shape of the automobile cannot be better protected.

The invention is defined by the subject-matter of the independent claim 1. Further aspects of the invention form the subject-matter of the dependent claims.

As described above, the automobile body frame and the automobile having the automobile body frame of the present invention have the following beneficial effects:
The automobile body frame and the automobile having the automobile body frame described in the present invention realize that the additional installation points of battery packs can effectively participate in the collision path and improve the collision security of the automobile body.

### BRIEF DESCRIPTION OF THE DRAWINGS

Figure 1 shows a schematic diagram of an embodiment of an automobile body frame of the present invention.
Figure 2 shows a schematic diagram of a transmission path of a collision of an automobile of the present invention.

### DESCRIPTION OF REFERENCE NUMERALS

- 1: Automobile body frame
- 10: Floor
- 11: Detachable battery pack mounting beam
- 12: Front longitudinal beam
- 13: Side door sill beam
- 14: Connecting member
- 15: Transverse support
- 2: Transmission path of frontal collision of automobile body
- 2': Transmission path of side collision of automobile body

### DETAILED DESCRIPTION

In the following, the implementation of the present invention will be described by specific concrete embodiments, and those skilled in the art can easily understand other advantages and effects of the present invention from the contents disclosed in the present description.

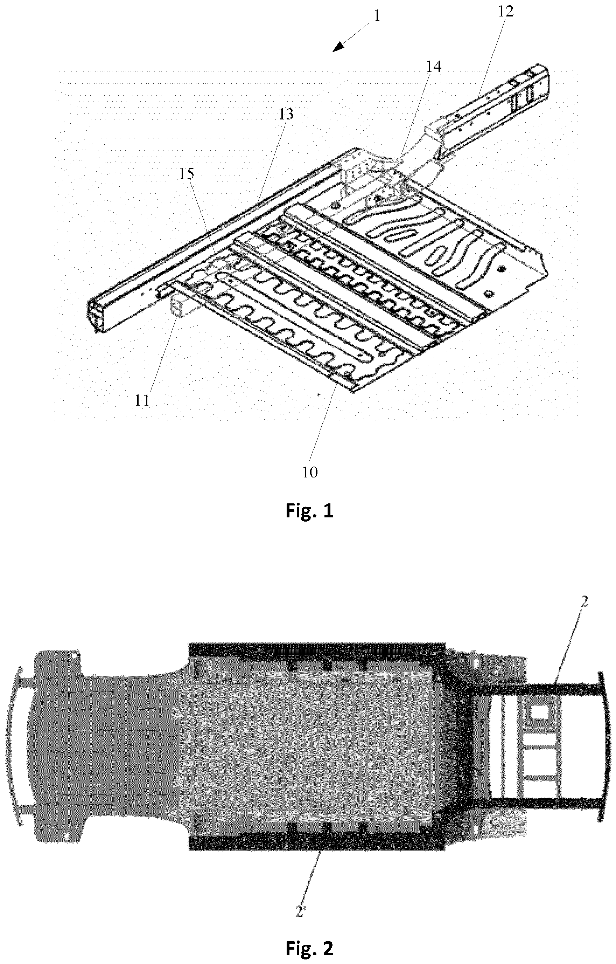

Please refer to Figure 1 and Figure 2. It should be noted that the structure, proportion, size, etc. shown in the drawings of the present description are only used to match the contents disclosed in the description, for those skilled in the art to understand and read, not used to limit defining conditions on which the present invention can be implemented, and thus do not have a technically significant meaning. Any modification of the structure, change in the proportional relationship or adjustment of the size, without affecting the effectiveness, which can be generated by the present invention, and the purpose, which can be achieved by the present invention, all should still fall into the scopes, which can be covered by the technical contents disclosed by the present invention. In the meantime, the terms such as "upper", "lower", "left", "right", "middle", "a" and "one" cited in the present description are also only used to facilitate the understanding of the description and not used to define the scopes, which can be implemented by the present invention, and the change or adjustment of the relative relationship of which, without substantial changes in the technical contents, should also be regarded as the scopes, which can be implemented by the present invention. The scope of the invention is defined only by the subject-matter of the appended claims.

### EMBODIMENT 1

The present embodiment provides an automobile body frame, which includes:
a first type of battery pack; and
a detachable battery pack mounting beam, with one side face thereof being arranged on a floor of the automobile body frame, and the other side face thereof being fitted with the first type of battery pack;

The automobile body frame provided by the present embodiment will be described below in conjunction with the drawings. Please refer to Figure 1, which shows a schematic diagram of an embodiment of the automobile body frame. As shown in Figure 1, the automobile body frame 1 includes: a first type of battery pack, a floor 10, a detachable battery pack mounting beam 11, a front longitudinal beam 12, a side door sill beam 13, a connecting member 14 and a transverse support 15.

In the present embodiment, the first type of battery pack is a narrow battery pack, wherein the narrow battery pack has a width of 1040 mm.

One side face of the detachable battery pack mounting beam 11, which is used for mounting the narrow battery pack, is arranged on the floor 10 of the automobile body frame 1, and the other side face is mounted with the first type of battery pack (as shown in Figure 1, the upper side face of the battery pack mounting beam 11 is connected at the underside of the floor 10 in the automobile body frame 1 via screws or bolts).

In the present embodiment, one end of the detachable battery pack mounting beam 11 is inserted into a connecting member 14. In the present embodiment, the connecting member 14 is arranged between the front longitudinal beam 12 and the side door sill beam 13 of the automobile body frame, and used for integrally connecting the front longitudinal beam 12 and the side door sill beam 13 together. In the present embodiment, the connecting piece 14 is made of aluminum casting and riveted to the root of the front longitudinal beam 12.

Please refer to Figure 2, which shows a schematic diagram of a transmission path of a collision of an automobile. As shown in Figure 2, when the automobile is in collision, the front longitudinal beam 12, the side door sill 13 and the connecting member 14 form the transmission path 2 of a frontal collision of the automobile body, which effectively absorbs the energy from the frontal collision and protects the deformation of the front wall area of the automobile.

In the present embodiment, in order to protect the side of the automobile, the transverse support 15 is connected between the front longitudinal beam 12 and the side door sill beam 13. The detachable battery pack mounting beam 11 and the side door sill beam 13 are integrally connected together via the transverse support 15, to form the transmission path 2' of a side collision of the automobile body, which effectively absorbs the energy from the side collision and protects the deformation of the B-strut area of the automobile.

The present embodiment further provides an automobile, which has an automobile body frame 1 described above.

In summary, the automobile body frame and the automobile having the automobile body frame described in the present invention realize that the additional installation points of battery packs can effectively participate in the collision path and improve the collision security of the automobile body. Therefore, the present invention effectively overcomes various shortcomings in the prior art and has high industrial utilization value.

The above described embodiments are merely illustrative of the principles and effects of the present invention, and are not intended to limit the present invention. Those skilled in the art can modify or change the above embodiments without departing from the scope of the invention, as defined by the appended claims.

## Claims

1. An automobile body frame, comprising:
a battery pack; and
a detachable battery pack mounting beam (11), with one side face thereof being arranged on a floor (10) of the automobile body frame (1), and the other side face thereof being fitted with the battery pack,
**characterized in that**, one end of the detachable battery pack mounting beam (11) is inserted into a connecting member (14) which is arranged between a side door sill beam (13) and a front longitudinal beam (12) of the automobile body frame (1), the detachable battery pack mounting beam (11) and the side door sill beam (13) are arranged in a longitudinal direction and are integrally connected together via a transverse support (15), to form a transmission path (2') of a side collision of the automobile body.

2. The automobile body frame according to claim 1, wherein the side door sill beam (13), the connecting member (14) and the front longitudinal beam (12) form a transmission path of a frontal collision of an automobile body (2).

3. An automobile, **characterized in** by comprising an automobile body frame (1) according to claim 1 or 2.

## Patentansprüche

1. Kraftfahrzeug-Karosserierahmen, umfassend:
einen Batteriesatz; und
einen abnehmbaren Batteriesatz-Montageträger (11), wobei dessen eine Seitenfläche an einem Boden (10) des Kraftfahrzeug-Karosserierahmens (1) angeordnet ist und dessen andere Seitenfläche mit dem Batteriesatz versehen ist,
**dadurch gekennzeichnet, dass** ein Ende des abnehmbaren Batteriesatz-Montageträgers (11) in ein Verbindungselement (14) eingesetzt ist, das zwischen einem Seitentürschweller (13) und einem vorderen Längsträger (12) des Kraftfahrzeug-Karosserierahmens (1) angeordnet ist, der abnehmbare Batteriesatz-Montageträger (11) und der Seitentürschweller (13) in einer Längsrichtung angeordnet und über einen Querträger (15) einstückig miteinander verbunden sind, um einen Übertragungsweg (2') eines Seitenaufpralls der Kraftfahrzeugkarosserie zu bilden.

2. Kraftfahrzeug-Karosserierahmen gemäß Anspruch 1, wobei der Seitentürschweller (13), das Verbindungselement (14) und der vordere Längsträger (12) einen Übertragungsweg eines Frontalaufpralls einer Kraftfahrzeugkarosserie (2) bilden.

3. Kraftfahrzeug, **dadurch gekennzeichnet, dass** es einen Kraftfahrzeug-Karosserierahmen (1) gemäß Anspruch 1 oder 2 umfasst.

## Revendications

1. Châssis de carrosserie automobile, comprenant :
un bloc-batterie; et
une poutre de montage de bloc-batterie amovible (11), une face latérale de celle-ci étant agencée sur un plancher (10) du châssis de carrosserie d'automobile (1), et l'autre face latérale étant équipée du bloc-batterie,
**caractérisé en ce que**, une extrémité de la poutre de montage de bloc-batterie amovible (11) est insérée dans un élément de liaison (14) qui est agencé entre une poutre de seuil de porte latérale (13) et une poutre longitudinale avant (12) du châssis de carrosserie d'automobile (1), la poutre de montage du bloc-batterie amovible (11) et la poutre de seuil de porte latérale (13) sont agencés dans une direction longitudinale et sont solidairement reliés entre eux via un support transversal (15), pour former un trajet de transmission (2') d'une collision latérale de la carrosserie automobile.

2. Châssis de carrosserie automobile selon la revendication 1, dans lequel la poutre de seuil de porte latérale (13), l'élément de liaison (14) et la poutre longitudinale avant (12) forment un trajet de transmission d'une collision frontale d'une carrosserie automobile (2).

3. Automobile, **caractérisée en ce qu'**elle comprend un châssis de carrosserie d'automobile (1) selon la revendication 1 ou 2.
